# EUROPÄISCHE PATENTSCHRIFT

(11) **EP 2 411 268 B1**
(45) Veröffentlichungstag und Bekanntmachung des Hinweises auf die Patenterteilung: **14.10.2015**
(21) Anmeldenummer: 10711164.3
(22) Anmeldetag: 29.03.2010
(51) Int. Cl.: B64C 9/22

(54) **TRAGFLÜGEL MIT EINER HOCHAUFTRIEBSKLAPPE**
AEROFOIL COMPRISING A HIGH LIFT FLAP
SURFACE PORTANTE À VOLET HYPERSUSTENTATEUR

(30) Priorität: 27.03.2009 US 164044 P; 27.03.2009 DE 102009015397
(43) Veröffentlichungstag der Anmeldung: 01.02.2012
(73) Patentinhaber: Airbus Operations GmbH, 21129 Hamburg (DE)
(72) Erfinder: SCHLIPF, Bernhard, 28201 Bremen (DE); GIBBERT, Markus, 28199 Bremen (DE); SCHULZE, Daniel, 28203 Bremen (DE); DANNE, Timo, 79591 Eimeldingen (DE)
(74) Vertreter: UEXKÜLL & STOLBERG
(86) Internationale Anmeldenummer: PCT/EP2010/001983
(87) Internationale Veröffentlichungsnummer: WO 2010/108698

(56) Entgegenhaltungen:
- EP-A2- 1 764 303
- US-A- 2 973 925
- US-A1- 2005 116 115

## Beschreibung

Diese Patentanmeldung beansprucht den Anmeldetag der deutschen Patentanmeldung DE 10 2009 015 397.7 und der United States-Provisional-Patentanmeldung 61/164,044, die beide am 27.03.2009 eingereicht worden sind.

Die Erfindung betrifft einen Tragflügel mit einem Hauptflügel und einer an diesem bewegbar angeordneten Hochauftriebsklappe.

Ein derartiger Tragflügel ist aus der EP 1 764 303 A2 bekannt, die als nächstliegender Stand der Technik angesehen wird und alle Merkmale des Oberbegriffes des Anspruchs 1 offenbart.

Aus der DE 10 2005 044 549 B4 ist ein Tragflügel mit einem Hauptflügel und einer Hochauftriebsklappe bekannt, die mittels zumindest zweier in der Spannweitenrichtung des Tragflügels nebeneinander angeordneten Verstellmechanismen an dem Tragflügel bewegbar angeordnet ist, wobei jeder der Verstellmechanismen aus miteinander gelenkig verbundenen Verstellhebeln unter Ausbildung von drei Gelenkachsen gebildet ist, deren Richtungen sich in einem gemeinsamen Pol treffen.

Aufgabe der Erfindung ist, einen Tragflügel mit einem Hauptflügel und einer an diesem bewegbar angeordnete Hochauftriebsklappe bereitzustellen, deren Verstellvorrichtung kinematisch optimiert ist.

Diese Aufgabe wird mit den Merkmalen des Patentanspruchs 1 gelöst. Weitere Ausführungsformen sind in den auf diesen rückbezogenen Unteransprüchen angegeben.

Erfindungsgemäß ist ein Tragflügel mit einem Hauptflügel und einer Hochauftriebsklappe, die mittels zumindest zwei in der Spannweitenrichtung des Tragflügels nebeneinander angeordneten Verstellmechanismen an dem Tragflügel bewegbar angeordnet ist, vorgesehen. Dabei weist jeder der Verstellmechanismen auf:
▪ einen ersten Verstellhebel, der über ein erstes Drehgelenk unter Ausbildung einer ersten Drehachse an dem Hauptflügel angelenkt ist,
▪ einen zweiten Verstellhebel, der über ein zweites Drehgelenk unter Ausbildung einer zweiten Drehachse an der Hochauftriebsklappe angelenkt ist,
▪ ein mittleres Gelenk, der den ersten und den zweiten Verstellhebel unter Ausbildung einer dritten Drehachse gelenkig miteinander verbindet,
wobei die erste, zweite und dritte Drehachse durch einen gemeinsamen Pol verlaufen, der bei dem Verstellen der Hochauftriebsklappe in Bezug auf die Lage des Hauptflügels fix ist. Erfindungsgemäß weist der Tragflügel eine Antriebsvorrichtung mit einem am Hauptflügel gelagerten Antriebsmodul und einem zu diesem bewegbaren Antriebshebel auf, der an der Hochauftriebsklappe angekoppelt ist. Dabei ist weiterhin insbesondere vorgesehen, dass der Tragflügel eine Anschlagvorrichtung zur Begrenzung der maximalen Ausfahrstellung der Hochauftriebsklappe aufweist.

Die Hochauftriebsklappe kann generell als ein Vorflügel und dabei eine Krügerklappe, die in seiner eingefahrenen Stellung an der Unterseite des Hauptflügels gelegen ist, oder ein Slat sein, der gemäß eines gekrümmten Verfahrwegs zwischen eine eingefahrenen und einer ausgefahrenen Stellung bewegbar ist. Alternativ oder zusätzlich kann die Hochauftriebsklappe als eine Hinterkanten-Klappe ausgebildet sein.

Weiterhin kann die Antriebsvorrichtung aus einem Linearantrieb oder einem Drehantrieb gebildet sein.

Der erfindungsgemäße Tragflügel kann weiterhin eine Anschlagvorrichtung zur Begrenzung der maximalen Ausfahrstellung des jeweiligen Verstellmechanismus aufweisen. Nach einem ersten Ausführungsbeispiel kann die Anschlagvorrichtung mit einem zwischen dem ersten und dem zweiten Verstellhebel wirkenden Anschlaghebel gebildet sein, der einstückig mit dem ersten Verstellhebel oder mit dem zweiten Verstellhebel und als Verlängerung desselben in Richtung zur zweiten Achse oder zur ersten Achse gebildet ist und der derart gestaltet ist, dass das freie Ende des Anschlagshebels in eine Anschlagstellung mit einer Auflagevorrichtung am zweiten Verstellhebel oder am ersten Verstellhebel gebracht werden kann, um die maximale Ausfahrstellung des jeweiligen Verstellmechanismus zu definieren.

Alternativ oder zusätzlich dazu kann die Anschlagvorrichtung mit einem Anschlaghebel zur Begrenzung der maximalen Ausfahrstellung der Hochauftriebsklappe gebildet sein, wobei der Anschlaghebel einstückig mit dem ersten Verstellhebel oder mit einem Beschlag des Hauptflügels und als Verlängerung desselben in Richtung zu dem Beschlag des Hauptflügels oder zum dritten Gelenk gebildet ist und der derart gestaltet ist, dass das freie Ende des Anschlagshebels in eine Anschlagstellung mit dem Beschlag des Hauptflügels oder dem ersten Verstellhebel gebracht werden kann, um die maximale Ausfahrstellung des jeweiligen Verstellmechanismus zu definieren.

Alternativ oder zusätzlich dazu kann die Anschlagvorrichtung weiterhin mit einem Anschlaghebel zur Begrenzung der maximalen Ausfahrstellung der Hochauftriebsklappe gebildet sein, wobei der Anschlaghebel einstückig mit dem zweiten Verstellhebel oder mit einem Beschlag der Hochauftriebsklappe und als Verlängerung desselben in Richtung zu dem Beschlag der Hochauftriebsklappe oder zum dritten Gelenk gebildet ist und der derart gestaltet ist, dass das freie Ende des Anschlagshebels in eine Anschlagstellung mit dem Beschlag der Hochauftriebsklappe oder dem zweiten Verstellhebel gebracht werden kann, um die maximale Ausfahrstellung des jeweiligen Verstellmechanismus zu definieren.

Die Anschlagvorrichtung kann generell derart ausgeführt sein, dass mit dieser eine maximale Ausfahrstellung des Vorflügels begrenzt wird, bei der die Wirkungsrichtungen der Verstellhebel zueinander einen Winkel von weniger als 180 Grad haben.

Auch kann vorgesehen sein, dass mit dem Anschlagshebel eine Federvorrichtung zusammenwirkt, die insbesondere zwischen dem Anschlagshebel und einem Hebel angeordnet sein kann. Die Federvorrichtung ist derart angeordnet und ausgeführt, dass diese eine Rückstellkraft auf den jeweiligen Verstellmechanismus bzw. die Hebel des Verstellmechanismus ausübt, mit der der Verstellmechanismus bzw. die Hebel des Verstellmechanismus in ihre eingefahrene Stellung bewegt werden. Auch kann die Federvorrichtung dazu vorgesehen und derart ausgeführt sein, dass diese die Funktion ausübt, das Erreichen der maximalen Ausfahrstellung des jeweiligen Verstellmechanismus abzufedern.

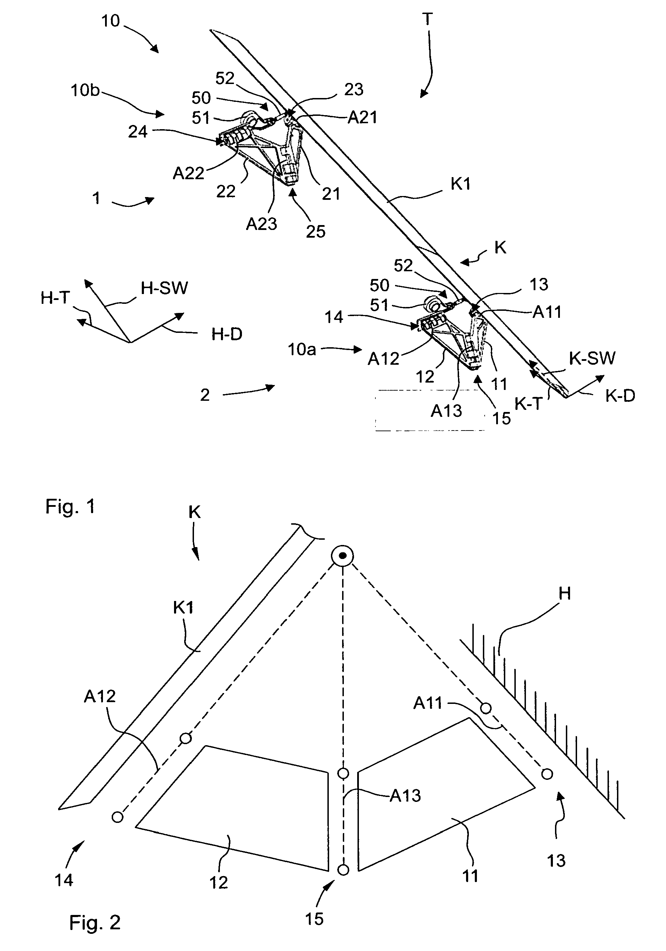

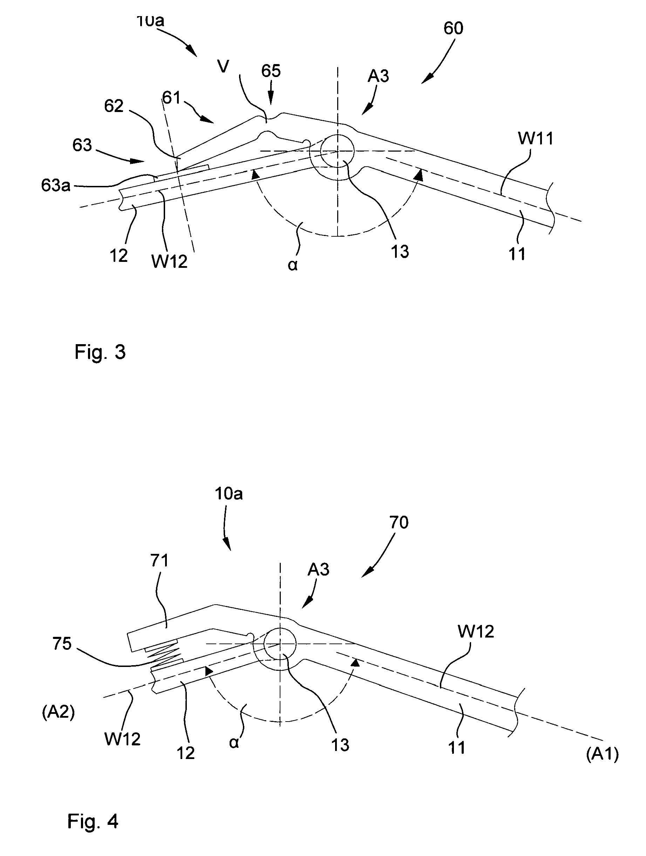

Im Folgenden werden Ausführungsbeispiele der Erfindung an Hand der beigefügten Figuren beschrieben, die zeigen:
▪ Figur 1 eine schematische perspektivische Darstellung eines Ausschnitts eines Ausführungsbeispiels einer an einem erfindungsgemäßen Tragflügel anzuordnenden Hochauftriebsklappe in Form eines Vorflügels in einer ausgefahrenen Stellung, der mittels zwei Verstellmechanismen an dem Hauptflügel bewegbar angeordnet ist,
▪ Figur 2 eine Darstellung einer Draufsicht eines der Verstellmechanismen in einer ausgefahrenen Stellung, die die Kinematik des Verstellmechanismus schematisch zeigt,
▪ Figur 3 eine Schnittdarstellung eines Ausführungsbeispiels einer Anschlagvorrichtung zur Begrenzung der maximalen Ausfahrstellung des Vorflügels,
▪ Figur 4 eine Schnittdarstellung eines weiteren Ausführungsbeispiels einer Anschlagvorrichtung zur Begrenzung der maximalen Ausfahrstellung des Vorflügels.

Die in der Figur 1 stellt in schematischer Weise ein Ausführungsbeispiel des erfindungsgemäßen Tragflügels T mit einem Hauptflügel einer Hochauftriebsklappe K dar. Die Hochauftriebsklappe K ist mittels einer Verstellvorrichtung 10 mit zumindest zwei Verstellmechanismen 10a, 10b an dem Hauptflügel angeordnet, die in der Spannweitenrichtung H-SW des Hauptflügels oder in der Spannweitenrichtung K-SW der Hochauftriebsklappe K nebeneinander angeordnet sind. Die Hochauftriebsklappe K kann erfindungsgemäß ein Vorflügel K1 oder eine Hinterkanten-Klappe sein.

In der Figur 1 ist die Hochauftriebsklappe K ein Vorflügel K1, der als Slat aufgebildet ist. Erfindungsgemäß kann der Vorflügel K1 auch eine Krüger-Klappe sein, die in seiner eingefahrenen Stellung an der Unterseite H1 des Hauptflügels gelegen ist. Der Vorflügel K1 ist in der Figur 1 einer ausgefahrenen Stellung dargestellt. In der Figur 1 sind zur Veranschaulichung des erfindungsgemäßen Funktionsprinzips an dem dargestellten Ausschnitt des Hauptflügels und des Vorflügels K1 zwei Verstellmechanismen 10a, 10b dargestellt. Auch ist in der Figur 1 ein Koordinatensystem für den Hauptflügel mit der Hauptflügel-Spannweitenrichtung H-SW, der Hauptflügel-Tiefenrichtung H-T und der Hauptflügel-Dickenrichtung H-D als Koordinatenachsen sowie Koordinatensystem für die Hochauftriebsklappe K mit der Hochauftriebsklappen-Spannweitenrichtung K-SW, der Hochauftriebsklappen-Tiefenrichtung K-T und der Hochauftriebsklappen-Dickenrichtung K-D als Koordinatenachsen eingetragen.

Die Hochauftriebsklappe bzw. der Vorflügel ist mittels zumindest zwei Verstellmechanismen an dem Hauptflügel zwischen einer eingefahrenen und einer ausgefahrenen Stellung bewegbar angeordnet. In der Figur 1 ist der dargestellte Vorflügel in einer ausgefahrenen Stellung gezeigt, wobei die dargestellte Ausfahrstellung nicht die maximale Ausfahrstellung der Hochauftriebsklappe K bzw. des Vorflügels K1 ist.

Wie aus der Figur 1 ersichtlich ist, weist der erste Verstellmechanismus 10a der Verstellvorrichtung 10 auf:
▪ einen ersten Verstellhebel 11, der über ein erstes Drehgelenk 13 unter Ausbildung einer ersten Drehachse A11 an dem Hauptflügel angelenkt ist, wobei die Drehachse A11 des ersten Drehgelenks 13 quer oder winklig zur Hauptflügel-Spannweitenrichtung H-SW und Hauptflügel-Tiefenrichtung H-T verläuft,
▪ einen zweiten Verstellhebel 12, der über ein zweites Drehgelenk 14 unter Ausbildung einer zweiten Drehachse A12 an der Hochauftriebsklappe K bzw. dem Vorflügel K1 angelenkt ist, wobei die Drehachse A12 des zweiten Drehgelenks 14 quer oder winklig zur Hochauftriebsklappen-Spannweitenrichtung K-SW und Hochauftriebsklappen-Dickenrichtung K-D verläuft,
▪ ein mittleres Gelenk 15, der den ersten 11 und den zweiten 12 Verstellhebel unter Ausbildung einer dritten Drehachse A13 gelenkig miteinander verbindet.

Erfindungsgemäß treffen sich die Richtungen der ersten, zweiten und dritten Drehachse A11, A12 bzw. A13 des ersten Verstellmechanismus 10a in einem gemeinsamen Pol P, der bei dem Verstellen der Hochauftriebsklappe K in Bezug auf die Lage des Hauptflügels fix, d.h. unabhängig von der Hochauftriebsklappe K bzw. des Vorflügels K1 ist. Dadurch führt die Hochauftriebsklappe K gegenüber dem Hauptflügel eine Bewegung mit einer teilkreisförmigen Bewegungsbahn auf, wenn diese von ihrer eingefahrenen in die ausgefahrene Stellung und umgekehrt bewegt wird.

Wie aus der Figur 1 weiterhin ersichtlich ist, weist der zweite Verstellmechanismus 10b der Verstellvorrichtung 10 auf:
▪ einen ersten Verstellhebel 21, der über ein erstes Drehgelenk 23 unter Ausbildung einer ersten Drehachse A21 an dem Hauptflügel angelenkt ist, wobei die Drehachse A21 des ersten Drehgelenks 23 quer oder winklig zur Hauptflügel-Spannweitenrichtung H-SW und Haupttlügel-Tiefenrichtung H-T verläuft,
▪ einen zweiten Verstellhebel 22, der über ein zweites Drehgelenk 24 unter Ausbildung einer zweiten Drehachse A22 an der Hochauftriebsklappe K bzw. dem Vorflügel K1 angelenkt ist, wobei die Drehachse A22 des zweiten Drehgelenks 24 quer oder winklig zur Hochauftriebsklappen-Spannweitenrichtung K-SW und Hochauftriebsklappen-Dickenrichtung K-D verläuft,
▪ ein mittleres Gelenk 25, der den ersten 21 und den zweiten 22 Verstellhebel unter Ausbildung einer dritten Drehachse A23 gelenkig miteinander verbindet.

Erfindungsgemäß treffen sich die Richtungen der ersten, zweiten und dritten Drehachse A1, A2 bzw. A3 des zweiten Verstellmechanismus 10b in einem gemeinsamen Pol P, der bei dem Verstellen der Hochauftriebsklappe K in Bezug auf die Lage des Hauptflügels fix, d.h. unabhängig von der Hochauftriebsklappe K bzw. des Vorflügels K1 ist.

In der Figur 2 ist beispielartig der erste Verstellmechanismus 10a in schematischer Weise zur Veranschaulichung des kinematischen Konzepts veranschaulicht ist.

Erfindungsgemäß ist vorgesehen,
▪ dass der Tragflügel T eine Antriebsvorrichtung 50 mit einem am Hauptflügel gelagerten Antriebsmodul 51 und einem zu diesem bewegbaren Antriebshebel 52 aufweist, der an der Hochauftriebsklappe K angekoppelt ist, und
▪ dass der Tragflügel T eine Anschlagvorrichtung 60 zur Begrenzung der maximalen Ausfahrstellung der Hochauftriebsklappe K bzw. des Vorflügels K1 aufweist.

Durch die erfindungsgemäßen Merkmale erfolgt eine kinematische Entkopplung des Antriebs von den in den Verstellmechanismen sowie der Hochauftriebsklappe K auftretenden Zwangskräften, die aufgrund von Verstellkräften wie auch durch die Verbiegung der Hochauftriebsklappe aufgrund von im Flugbetrieb auftretenden Luftkräften entstehen.

Die Antriebsvorrichtung 50 kann aus einem Linearantrieb oder aus einem Drehantrieb gebildet sein.

Die Anschlagvorrichtung kann in verschiedener Weise ausgebildet und insbesondere mit einem Anschlaghebel sein. Die Anschlagvorrichtung kann an nur einem Verstellmechanismus, an mehreren Verstellmechanismen oder an sämtlichen Verstellmechanismen einer Verstellvorrichtung 10 vorgesehen sein. In den Figuren 3 und 4 sind jeweils ein Ausführungsbeispiel der erfindungsgemäßen Anschlagvorrichtung dargestellt, wobei sich diese dargestellten Ausführungsbeispiele der Anschlagvorrichtung zwischen dem ersten 11 und einem zweiten 12 Verstellhebel wirken, so dass die Wirkungslinien W11 bzw. W12 derselben in der maximalen Ausfahrstellung, die die Anschlagvorrichtung definiert, in einem Winkel alpha zueinander verlaufen. Unter Wirkungslinie des ersten Verstellhebels oder des zweiten Verstellhebels 12, 22 wird in diesem Fall die Verbindungslinie zwischen der ersten Achse A11, A21 und der dritten Achse A13, A23 bzw. zwischen der dritten Achse A12, A22 und der zweiten Achse A12, A22 verstanden.

In der Figur 3 ist eine Schnittdarstellung eines Ausführungsbeispiels einer Anschlagvorrichtung 60 an Hand des ersten Verstellmechanismus 10a gezeigt, wobei die Merkmale dieses Ausführungsbeispiel alternativ oder zusätzlich am zweiten Verstellmechanismus 10b vorgesehen sein können. In dem dargestellten Ausführungsbeispiel ist der Anschlaghebel derart an dem Verstellmechanismus vorgesehen, dass dieser zwischen dem ersten Verstellhebel 11 und dem zweiten Verstellhebel 12 wirkt. Dazu ist in dem dargestellten Ausführungsbeispiel ein Anschlaghebel 16 an dem ersten Verstellhebel 11 angeordnet.

Der Anschlaghebel 61 ist einstückig mit dem ersten Verstellhebel 11 und als Verlängerung desselben in Richtung zur zweiten Achse A2 gebildet. Das freie Ende 62 des Anschlaghebels 61 ist zur Anlage an der Oberseite 12a des zweiten Verstellhebels 12 vorgesehen, wenn die Ausfahrstellung der Hochauftriebsklappe K maximal ist, d.h. wenn der die Hochauftriebsklappe K in ihrer maximalen Ausfahrstellung befindet. Als Gegenlage an dem zweiten Verstellhebel 12, auf der der Anschlaghebel 61 aufliegt, wenn der Verstellmechanismus 10a in der maximalen Ausfahrstellung befindet, kann eine Auflagevorrichtung insbesondere in Form einer Auflageplatte 63 vorgesehen sein.

Alternativ oder zusätzlich zu dieser Ausführungsform kann auch ein Anschlaghebel 16 an dem zweiten Verstellhebel 12 angeordnet sein. Dabei ergeben sich die Merkmale analog zu dem zuvor beschriebenen Ausführungsbeispiel, bei dem der Anschlaghebel 16 an dem ersten Verstellhebel 11 angeordnet ist.

Alternativ oder zusätzlich dazu kann die Anschlagvorrichtung 60, 70 mit einem Anschlaghebel 61, 71 zur Begrenzung der maximalen Ausfahrstellung der Hochauftriebsklappe K derart ausgeführt sein, dass diese zwischen der Hochauftriebsklappe K und dem zweiten Verstellhebel 12, 22 und/oder zwischen dem Hauptflügel und dem ersten Verstellhebel 11, 21 wirkt.

In der ersten genannten Alternative ist der Anschlaghebel 61, 71 einstückig mit dem zweiten Verstellhebel 12, 22 oder mit einem Beschlag der Hochauftriebsklappe K und als Verlängerung desselben in Richtung zu dem Beschlag der Hochauftriebsklappe K oder zum dritten Gelenk 13, 23 gebildet ist und der derart gestaltet ist, dass das freie Ende 62, 72 des Anschlagshebels 61, 71 in eine Anschlagstellung mit dem Beschlag der Hochauftriebsklappe K oder dem zweiten Verstellhebel 12, 22 gebracht werden kann, um die maximale Ausfahrstellung des jeweiligen Verstellmechanismus 10a, 10b zu definieren.

In der zweiten genannten Alternative ist der Anschlaghebel 61, 71 einstückig mit dem jeweiligen ersten Verstellhebel 11, 21 oder mit einem Beschlag des Hauptflügels und als Verlängerung desselben in Richtung zu dem Beschlag des Hauptflügels oder zum dritten Gelenk 13, 23 gebildet ist und der derart gestaltet ist, dass das freie Ende 62, 72 des Anschlagshebels 61, 71 in eine Anschlagstellung mit dem Beschlag des Hauptflügels oder dem ersten Verstellhebel 11, 21 gebracht werden kann, um die maximale Ausfahrstellung des jeweiligen Verstellmechanismus 10a, 10b zu definieren.

Erfindungsgemäß kann die Anschlagvorrichtung derart gestaltet sein, dass die Anschlagvorrichtung 60, 70 eine maximale Ausfahrstellung des Vorflügels begrenzt wird, bei der die Wirkungsrichtungen W11, W12 der Verstellhebel zueinander einen Winkel (alpha, α) von weniger als 180 Grad und z.B. maximal 179 Grad haben.

Generell kann der Anschlaghebel 61 mit einer Federvorrichtung 65 versehen sein, die insbesondere als Querschnittsverjüngung des Anschlagshebels 61 ausgebildet sein kann. In dem Ausführungsbeispiel nach der Figur 3 wird dadurch erreicht, dass in der Phase, in der die Verstellvorrichtung 10 ihre maximale Ausfahrstellung erreicht, z.B. indem das freie Ende des Anschlagshebels 61 in Anlage mit dem zweiten Verstellhebel oder der Auflageplatte 63 derselben kommt, die dabei entstehenden Anschlagmomente und Anschlagkräfte von dem Anschlagshebel 61 federnd aufgenommen wird. Dadurch wird der Anschlag der Verstellhebel 11, 12 bei Erreichen der maximalen Ausfahrstellung der Verstellvorrichtung oder des jeweiligen Verstellmechanismus mit einem federnden Aufnahmeweg versehen und die Anschlagkräfte minimiert. Auf diese Weise können die maximal auftretenden Kräfte bei dem Erreichen des Anschlags in der maximalen Ausfahrstellung reduziert und die Strukturdimensionierung optimiert werden.

Alternativ oder zusätzlich kann die Federvorrichtung auch durch eine z.B. zwischen dem ersten Verstellhebel oder dem zweiten Verstellhebel wirkende Federvorrichtung 75 (Figur 4) gebildet sein, wie dies in dem in der Figur 4 dargestellten Ausführungsbeispiel vorgesehen ist. Wenn die Anschlagvorrichtung 60, 70 zur Begrenzung der maximalen Ausfahrstellung der Hochauftriebsklappe K derart ausgeführt sein soll, dass diese zwischen der Hochauftriebsklappe K und dem zweiten Verstellhebel 12, 22 und/oder zwischen dem Hauptflügel und dem ersten Verstellhebel 11, 21 wirkt, kann eine Federvorrichtung nach der Figur 4 in analoger Weise auch an dem Hauptflügel 10 oder an der Hochauftriebsklappe K angeordnet sein.

Die Federvorrichtung ist derart angeordnet und ausgeführt, dass diese eine Rückstellkraft auf den jeweiligen Verstellmechanismus bzw. die Hebel des Verstellmechanismus ausübt, mit der der Verstellmechanismus bzw. die Hebel des Verstellmechanismus in ihre eingefahrene Stellung bewegt werden. Auch kann die Federvorrichtung dazu vorgesehen und derart ausgeführt sein, dass diese die Funktion ausübt, um das Erreichen der maximalen Ausfahrstellung des jeweiligen Verstellmechanismus abzufedern.

## Patentansprüche

1. Tragflügel (T) mit einem Hauptflügel und einer Hochauftriebsklappe (K), die mittels zumindest zwei in der Spannweitenrichtung des Tragflügels (T) nebeneinander angeordneten Verstellmechanismen (10a, 10b) an dem Tragflügel (T) bewegbar angeordnet ist, jeder der Verstellmechanismen (10) aufweisend:
▪ einen ersten Verstellhebel (11, 21), der über ein erstes Drehgelenk (13, 23) unter Ausbildung einer ersten Drehachse (A11, A21) an dem Hauptflügel angelenkt ist,
▪ einen zweiten Verstellhebel (12, 22), der über ein zweites Drehgelenk (23) unter Ausbildung einer zweiten Drehachse (A21, A22) an der Hochauftriebsklappe (K) angelenkt ist,
▪ ein mittleres Gelenk (15, 25), der den ersten (11, 21) und den zweiten (12, 22) Verstellhebel unter Ausbildung einer dritten Drehachse (A31, A32) gelenkig miteinander verbindet,
wobei die erste, zweite und dritte Drehachse (A11, A12, A13; A21, A22, A23) durch einen gemeinsamen Pol (P) verlaufen, der bei dem Verstellen der Hochauftriebsklappe (K) in Bezug auf die Lage des Hauptflügels fix ist,
**dadurch gekennzeichnet,**
▪ **dass** der Tragflügel (T) eine Antriebsvorrichtung (50) mit einem am Hauptflügel (H) gelagerten Antriebsmodul (51) und einem zu diesem bewegbaren Antriebshebel (52) aufweist, der an der Hochauftriebsklappe (K) angekoppelt ist.

2. Tragflügel (T) nach dem Anspruch 1, **dadurch gekennzeichnet, dass** die Hochauftriebsklappe ein Vorflügel ist.

3. Tragflügel (T) nach dem Anspruch 1, **dadurch gekennzeichnet, dass** der Vorflügel eine Krügerklappe (K1) ist, die in seiner eingefahrenen Stellung an der Unterseite (H1) des Hauptflügels (H) gelegen ist.

4. Tragflügel (T) nach dem Anspruch 3, **dadurch gekennzeichnet, dass** der Vorflügel ein Slat ist.

5. Tragflügel (T) nach dem Anspruch 1, **dadurch gekennzeichnet, dass** die Hochauftriebsklappe eine Hinterkanten-Klappe ist.

6. Tragflügel (T) nach einem der voranstehenden Ansprüche, **dadurch gekennzeichnet, dass** die Antriebsvorrichtung (50) aus einem Linearantrieb gebildet ist.

7. Tragflügel (T) nach einem der voranstehenden Ansprüche 1 bis 5, **dadurch gekennzeichnet, dass** die Antriebsvorrichtung (50) aus einem Drehantrieb gebildet ist.

8. Tragflügel (T) nach einem der voranstehenden Ansprüche, **dadurch gekennzeichnet, dass** der Tragflügel (T) eine Anschlagvorrichtung (60, 70) zur Begrenzung der maximalen Ausfahrstellung der Hochauftriebsklappe (K) aufweist.

9. Tragflügel (T) nach dem Anspruch 8, **dadurch gekennzeichnet, dass** die Anschlagvorrichtung (60, 70) mit einem zwischen dem ersten (11, 21) und dem zweiten (12, 22) Verstellhebel wirkenden Anschlaghebel (61, 71) gebildet ist, der einstückig mit dem ersten Verstellhebel (11, 21) oder mit dem zweiten Verstellhebel (12, 22) und als Verlängerung desselben in Richtung zur zweiten Achse (A12, A22) oder zur ersten Achse (A11, A21) gebildet ist und der derart gestaltet ist, dass das freie Ende des Anschlagshebels (61, 71) in eine Anschlagstellung mit einer Auflagevorrichtung (63, 73) am zweiten Verstellhebel (12, 22) oder am ersten Verstellhebel (11, 21) gebracht werden kann, um die maximale Ausfahrstellung des jeweiligen Verstellmechanismus (10a, 10b) zu definieren.

10. Tragflügel (T) nach dem Anspruch 8, **dadurch gekennzeichnet, dass** die Anschlagvorrichtung (60, 70) mit einem Anschlaghebel (61, 71) zur Begrenzung der maximalen Ausfahrstellung der Hochauftriebsklappe (K) gebildet ist, der einstückig mit dem ersten Verstellhebel (11, 21) oder mit einem Beschlag des Hauptflügels und als Verlängerung desselben in Richtung zu dem Beschlag des Hauptflügels oder zum dritten Gelenk (13, 23) gebildet ist und der derart gestaltet ist, dass das freie Ende (62, 72) des Anschlagshebels (61, 71) in eine Anschlagstellung mit dem Beschlag des Hauptflügels oder dem ersten Verstellhebel (11, 21) gebracht werden kann, um die maximale Ausfahrstellung des jeweiligen Verstellmechanismus (10a, 10b) zu definieren.

11. Tragflügel (T) nach einem der Ansprüche 8 bis 10, **dadurch gekennzeichnet, dass** die Anschlagvorrichtung (60, 70) mit einem Anschlaghebel (61, 71) zur Begrenzung der maximalen Ausfahrstellung der Hochauftriebsklappe (K) gebildet ist, der einstückig mit dem zweiten Verstellhebel (12, 22) oder mit einem Beschlag der Hochauftriebsklappe (K) und als Verlängerung desselben in Richtung zu dem Beschlag der Hochauftriebsklappe (K) oder zum dritten Gelenk (13, 23) gebildet ist und der derart gestaltet ist, dass das freie Ende (62, 72) des Anschlagshebels (61, 71) in eine Anschlagstellung mit dem Beschlag der Hochauftriebsklappe (K) oder dem zweiten Verstellhebel (12, 22) gebracht werden kann, um die maximale Ausfahrstellung des jeweiligen Verstellmechanismus (10a, 10b) zu definieren.

12. Tragflügel (T) nach einem der voranstehenden Ansprüche 8 bis 11 **dadurch gekennzeichnet, dass** die Anschlagvorrichtung (60, 70) derart ausgeführt ist, dass mit dieser eine maximale Ausfahrstellung des Vorflügels begrenzt wird, bei der die Wirkungsrichtungen (W11, W12) der Verstellhebel zueinander einen Winkel (alpha) von kleiner als 180 Grad haben.

13. Tragflügel (T) nach einem der voranstehenden Ansprüche 8 bis 12 **dadurch gekennzeichnet, dass** mit dem Anschlagshebel (61, 71) eine Federvorrichtung (75) zusammenwirkt, um das Erreichen der maximalen Ausfahrstellung des jeweiligen Verstellmechanismus (10a, 10b) abzufedern.

## Claims

1. An aerofoil wing (T) comprising a main aerofoil and a high-lift flap (K), which is movably arranged on the aerofoil wing (T) by at least two adjustment mechanisms (10a, 10b) arranged side-by-side in a spanwise direction of the aerofoil wing (T), each of the adjustment mechanisms (10) having:
▪ a first adjustment lever (11, 21), which is hinged to the main aerofoil via a first rotary linkage (13, 23), forming a first axis of rotation (A11, A21),
▪ a second adjustment lever (12, 22), which is hinged to the high-lift flap (K) via a second rotary linkage (23), forming a second axis of rotation (A21, A22), and
▪ a central linkage (15, 25), which links together the first (11, 21) and the second adjustment levers (12, 22), forming a third axis of rotation (A31, A32),
wherein the first, second and third axes of rotation (A11, A12, A13; A21, A22, A23) pass through a common pole (P) which is fixed while the high-lift flap (K) is positioned with respect to the main aerofoil,
**characterized in that**
▪ the aerofoil wing (T) has a drive device (50) with a drive module (51) mounted on the main aerofoil (H) and movable with respect to the drive module a drive lever (52), which is coupled to the high-lift flap.

2. The aerofoil wing (T) in accordance with Claim 1, **characterized in that** the high-lift flap is a leading-edge flap.

3. The aerofoil wing (T) in accordance with Claim 1, **characterized in that** the leading-edge flap is a Krüger flap (K1), which in its retracted position lies against the underside (H1) of the main aerofoil (H).

4. The aerofoil wing (T) in accordance with Claim 3, **characterized in that** the leading-edge flap is a slat.

5. The aerofoil wing (T) in accordance with Claim 1, **characterized in that** the high-lift flap is a trailing-edge flap.

6. The aerofoil wing (T) in accordance with Claim 1, **characterized in that** the drive device (50) comprises a linear drive.

7. The aerofoil wing (T) in accordance with any of preceding claims 1 to 5, **characterized in that** the drive device (50) comprises a rotary drive.

8. The aerofoil wing (T) in accordance with any of the preceding claims, **characterized in that** the aerofoil wing (T) has a stop device (60, 70) to limit a maximum extended setting of the high-lift flap (K).

9. The aerofoil wing in accordance with Claim 8, **characterized in that** the stop device (60, 70) comprises a stop lever (61, 71) acting between the first (11, 21) and the second (12, 22) adjustment lever, which is integrally constituted with the first adjustment lever (11, 21), or with the second adjustment lever (12, 22), and as an extension of the same in a direction towards the second axis (A12, A22), or the first axis (A11, A21), and is configured such that a free end of the stop lever (61, 71) can be brought into a stop setting with a bearing device (63, 73) on the second adjustment lever (12, 22), or on the first adjustment lever (11, 21) so as to define the maximum extended setting of the respective adjustment mechanism (10a, 10b).

10. The aerofoil wing (T) in accordance with Claim 8, **characterized in that** the stop device (60, 70) comprises a stop lever (61, 71) to limit the maximum extended setting of the high-lift flap (K), which is integrally constituted with the first adjustment lever (11, 21), or with a fitting of the main aerofoil, and as an extension of the same in a direction towards the fitting of the main aerofoil, or towards the third linkage (13, 23), and is configured such that a free end (62, 72) of the stop lever (61, 71) can be brought into a stop setting with the fitting on the main aerofoil, or the first adjustment lever (11, 21) so as to define the maximum extended setting of the respective adjustment mechanism (10a, 10b).

11. The aerofoil wing (T) in accordance with any of the claims 8 to 10, **characterized in that** the stop device comprises (60, 70) a stop lever (61, 71) to limit the maximum extended setting of the high-lift flap (K), which is integrally constituted with the second adjustment lever (12, 22), or with a fitting of the high-lift flap (K), and as an extension of the same in a direction towards the fitting of the high-lift flap (K), or towards the third linkage (13, 23), and is configured such that the free end (62, 72) of the stop lever (61, 71) can be brought into a stop setting with the fitting on the high-lift flap (K) or the second adjustment lever (12, 22) so as to define the maximum extended setting of the respective adjustment mechanism (10a, 10b).

12. The aerofoil wing (T) in accordance with any oft he preceding claims 8 to 11, **characterized in that** the stop device (60, 70) is configured such that with the latter a maximum extended setting of the leading-edge flap is limited, in which directions of action (W11, W12) of the adjustment lever have an angle (alpha) of less than 180 degrees relative to one another.

13. The aerofoil wing (T) in accordance with any of the preceding claims 8 to 12, **characterized in that** a spring device (75) acts together with the stop lever (61, 71) so as to cushion the respective adjustment mechanism (10a, 10b) as it attains the maximum extended setting.

## Revendications

1. Aile portante (T) avec une aile principale et un dispositif hypersustentateur (K) qui est placé de manière mobile sur l'aile principale (T) au moyen d'au moins deux mécanismes de réglage (10a, 10b) placés l'un à côté de l'autre dans la direction de l'envergure de l'aile portante (T), chacun des mécanismes de réglage (10) présentant :
- un premier levier de réglage (11, 21) qui est articulé sur l'aile principale par un premier pivot (13, 23) en formant un premier axe de rotation (A11, A21),
- un second levier de réglage (12, 22) qui est articulé sur le dispositif hypersustentateur (K) par un second pivot (23) en formant un second axe de rotation (A21, A22),
- une articulation centrale (15, 25) qui relie le premier levier de réglage (11, 21) et le second levier de réglage (12, 22) l'un à l'autre de manière articulée en formant un troisième axe de rotation (A31, A32),
cependant que le premier, le deuxième et le troisième axe de rotation (A11, A12, A13 ; A21, A22, A23) passent par un pôle commun (P) qui est fixe par rapport à la position de l'aile principale lors du réglage du dispositif hypersustentateur (K), **caractérisée en ce**
**que** l'aile principale (T) présente un dispositif d'entraînement (50) avec un module d'entraînement (51) positionné sur l'aile principale (H) et avec un levier d'entraînement (52), mobile par rapport à celui-ci, qui est couplé au dispositif hypersustentateur (K).

2. Aile portante (T) selon la revendication 1, **caractérisée en ce que** le dispositif hypersustentateur (K) est un bec de bord d'attaque.

3. Aile portante (T) selon la revendication 1, **caractérisée en ce que** le bec de bord d'attaque est un bec de type Krüger (K1) qui est situé, dans sa position rentrée, sur la face inférieure (H1) de l'aile portante (H).

4. Aile portante (T) selon la revendication 3, **caractérisée en ce que** le bec de bord d'attaque est un bec à fente commandé.

5. Aile portante (T) selon la revendication 1, **caractérisée en ce que** le dispositif hypersustentateur est un volet de bord de fuite.

6. Aile portante (T) selon l'une des revendications précédentes, **caractérisée en ce que** le dispositif d'entraînement (50) est formé par un entraînement linéaire.

7. Aile portante (T) selon l'une des revendications précédentes, **caractérisée en ce que** le dispositif d'entraînement (50) est formé par un entraînement rotatif.

8. Aile portante (T) selon l'une des revendications précédentes, **caractérisée en ce que** l'aile portante (T) présente un dispositif de butée (60, 70) pour limiter la position de déploiement maximal du dispositif hypersustentateur (K).

9. Aile portante (T) selon la revendication 8, **caractérisée en ce que** le dispositif de butée (60, 70) est formé avec un levier de butée (61, 71), qui agit entre le premier levier de réglage (11, 21) et le deuxième levier de réglage (12, 22), qui est formé en une pièce avec le premier levier de réglage (11, 21) ou avec le deuxième levier de réglage (12, 22) et en tant que prolongation de celui-ci en direction du second axe (A12, A22) ou du premier axe (A11, A21) et qui est configuré tel que l'extrémité libre du levier de butée (61, 71) peut être amenée dans une position de butée avec un dispositif d'appui (63 73) sur le deuxième levier de réglage (12, 22) ou sur le premier levier de réglage (11, 21) pour définir la position de déploiement maximal du mécanisme de réglage respectif (10a, 10b).

10. Aile portante (T) selon la revendication 8, **caractérisée en ce que** le dispositif de butée (60, 70) est formé avec un levier de butée (61, 71) pour limiter la position de déploiement maximal du dispositif hypersustentateur (K), levier qui est formé en une partie avec le premier levier de réglage (11, 21) ou avec une ferrure de l'aile principale et en tant que prolongation de celui-ci en direction de la ferrure de l'aile principale ou de la troisième articulation (13, 23) et qui est configuré tel que l'extrémité libre (62, 72) du levier de butée (61, 71) peut être amenée dans une position de butée avec la ferrure de l'aile principale ou avec le premier levier de réglage (11, 21) pour définir la position de déploiement maximal du mécanisme de réglage respectif (10a, 10b).

11. Aile portante (T) selon l'une des revendications 8 à 10, **caractérisée en ce que** le dispositif de butée (60, 70) est formé avec un levier de butée (61, 71) pour limiter la position de déploiement maximal du dispositif hypersustentateur (K), levier qui est formé en une partie avec le second levier de réglage (12, 22) ou avec une ferrure du dispositif hypersustentateur (K) et en tant que prolongation de celui-ci en direction de la ferrure du dispositif hypersustentateur (K) ou de la troisième articulation (13, 23) et qui est configuré tel que l'extrémité libre (62, 72) du levier de butée (61, 71) peut être amenée dans une position de butée avec la ferrure du dispositif hypersustentateur (K) ou du second levier de réglage (12, 22) pour définir la position de déploiement maximal du mécanisme de réglage respectif (10a, 10b).

12. Aile portante (T) selon l'une des revendications 8 à 10, **caractérisée en ce que** le dispositif de butée (60, 70) est réalisé de telle manière qu'une position de déploiement maximal du bec de bord d'attaque, pour laquelle les directions d'action (W11, W12) des leviers de réglage ont, l'une par rapport à l'autre, un angle (alpha) de moins de 180 degrés, est limitée avec celui-ci.

13. Aile portante (T) selon l'une des revendications 8 à 12, **caractérisée en ce qu'**un dispositif à ressort (75) coopère avec le levier de butée (61, 71) pour amortir le fait d'atteindre la position de déploiement maximal du mécanisme de réglage respectif (10a, 10b).
